# EUROPÄISCHE PATENTANMELDUNG

(11) **EP 1 378 394 A2**
(43) Veröffentlichungstag der Anmeldung: **07.01.2004**
(21) Anmeldenummer: 03400025.7
(22) Anmeldetag: 16.05.2003
(51) Int. Cl.: B60Q 1/48

(54) **Fahrzeugumfelderfassungssystem, Verfahren und Steuergerät hierfür**

(30) Priorität: 05.07.2002 DE 10230303
(71) Anmelder: Valeo Schalter und Sensoren GmbH, 74321 Bietigheim-Bissingen (DE)
(72) Erfinder: Güllich, Armin, 71522 Backnang (DE)
(74) Vertreter: Bulling, Alexander, Dr.

(57) **Zusammenfassung**

Fahrzeugumfelderfassungssystem zur Überwachung des Nahbereichs eines Fahrzeuges (10) sowie Verfahren zum Betreiben eines solchen Systems und Steuergerät (11) für ein solches System mit den Nahbereich erfassenden Sensoren (12,13,14,15), mit einem Steuer- und/oder Regelgerät (11) zur Auswertung und Weiterleitung von Signalen, welche jeweils von einer Reihe von Sensoren (12,13,14,15) erzeugt werden, wobei mindestens an einer Seite der Peripherie des Fahrzeuges (10) jeweils eine Mehrzahl von Sensoren angeordnet (12,13,14,15) ist, wobei die Sensoren mit variierenden Abständen zueinander angeordnet sind und dass die entsprechenden Abstandswerte der Sensoren (12,13,14,15) in dem Steuer- und/oder Regelgerät (11) hinterlegbar sind.

## Beschreibung

Die Erfindung betrifft ein Fahrzeugumfelderfassungssystem zur Erfassung und Überwachung des Nahbereichs eines Fahrzeuges, insbesondere eines Kraftfahrzeuges, sowie ein Verfahren zum Betreiben eines Fahrzeugumfelderfassungssystems und ein in derartigen Systemen verwendbares Steuerund/oder Regelgerät.

Derartige Systeme zur Umfelderfassung werden insbesondere in Kraftfahrzeugen dazu verwendet, um den nicht sichtbaren Nahbereich des Fahrzeuges zu erfassen und durch Ausgabe eines

Signals den Fahrer des Fahrzeuges auf eine drohende Kollision mit Gegenständen oder anderen Fahrzeugen frühzeitig hinzuweisen. Hierzu weisen derartige Systeme jeweils eine Mehrzahl von Sensoren auf, die an der Vorderund Rückseite des Fahrzeuges und/oder an den seitlichen Seiten angeordnet sind.

Bei den bekannten Systemen zur Fahrzeugumfelderfassung sind die Sensoren regelmäßig symmetrisch im Verhältnis zu dem Fahrzeug und zueinander angeordnet, um eine gleichmäßige Fahrzeugumfelderfassung zu gewährleisten. Die Anordnung der Sensoren ist hierbei meist spiegelbildlich zur Fahrzeugmitte. Die Erfassung und Weiterverarbeitung von Gegenständen und Objekten im Nahbereich des Fahrzeuges erfolgt durch direkte Weiterverarbeitung der von den jeweiligen Sensoren erzeugten Signale in einem Steuer- und Regelgerät, durch welches ein entsprechendes Warnsignal an einen Signalgeber ausgegeben wird. Nachteilig bei den bekannten Systemen ist, dass bei bestimmten Fahrzeugkonstruktionen eine symmetrische Anordnung der Sensoren nicht möglich ist bzw. zu Lücken und damit Erfassungsfehlern durch das System führt. Dies ist zum Beispiel der Fall bei Fahrzeug-Kennzeichenträgern, welche außermittig im Bereich des Stoßfängers angeordnet sind. Des Weiteren können durch nachträglich am Fahrzeug befestigte Elemente, wie zum Beispiel Stoßfänger, Gepäckträger oder dergleichen, einzelne Abschnitte einer Vorder- oder Rückseite eines Fahrzeuges abgedeckt werden, wodurch eine symmetrische Anordnung und Aufteilung von Sensoren verhindert wird.

Die vorliegende Erfindung hat zur Aufgabe, ein Fahrzeugumfelderfassungssystem, ein Verfahren zum Betreiben eines derartigen Systems sowie ein Steuergerät hierfür bereitzustellen, welches vergrößerte Anwendungsmöglichkeiten und einen flexibleren Einsatz an unterschiedlichsten Fahrzeugkarosserien ermöglicht und insbesondere hinsichtlich der Anordnung und Positionierung von Sensoren am Fahrzeug eine größere Flexibilität aufweist.

Diese Aufgabe wird erfindungsgemäß durch ein Fahrzeugumfelderfassungssystem zur Überwachung des Nahbereichs eines Fahrzeuges dadurch gelöst, dass je eine Mehrzahl von an einer Seite der Peripherie des Fahrzeuges angeordneten Sensoren mit variierenden Abständen zueinander angeordnet sind und dass die entsprechenden Positionswerte der Sensoren in dem Steuergerät hinterlegbar sind. Hierdurch ist es möglich, die Sensoren des Fahrzeugumfelderfassungssystems in unterschiedlichen Abständen zueinander zu positionieren, da die Asymmetrie einer Anordnung bzw. die verschiedenen Abstände der Sensoren zueinander auf einfache Weise durch das Steuer- und/oder Regelgerät des Systems bei der Auswertung zur Erzeugung eines Warnsignals Berücksichtigung finden. Es wird hierdurch vermieden, dass bei der Erfassung von Objekten im Nahbereich des Fahrzeuges Lücken in der Erfassung entstehen und es somit zu Fehlauswertungen, das heißt zu späte oder gar keine Erzeugung eines Warnsignals, kommt. Durch das Berücksichtigen von den variierenden Abständen der Sensoren, das heißt den relativen oder absoluten Positionen der Sensoren und die Hinterlegbarkeit dieser Werte in dem Steuer- und/oder Regelgerät, kann durch einfache Korrekturberechnung bei der Auswertung der erfassten Signale auch eine nichtsymmetrische Anordnung der Sensoren berücksichtigt werden. Unter den Abständen zwischen den Sensoren wird im vorliegenden Fall der vertikale Abstand ihrer Positionen verstanden, der im vorliegenden Zusammenhang maßgeblich ist. Selbstverständlich können ebenso horizontale Positionsverschiebungen von Sensoren zueinander durch das erfindungsgemäße System Berücksichtigung finden. Mit dem erfindungsgemäßen Fahrzeugumfelderfassungssystem kann nun auch ein Fahrzeug ausgestattet werden, bei welchem aufgrund der Konstruktion oder des Vorhandenseins von Anbauteilen eine gleichmäßige und symmetrische Verteilung von Sensoren nicht an allen Seiten des Fahrzeuges möglich ist. Dies ist zum Beispiel der Fall bei Fahrzeugen mit verschobenen, das heißt auf einer Seite des Stoßfängers angeordneten Kennzeichenträgern, bei welchen bisher ein Verwenden von Fahrzeugumfelderfassungssystemen nicht möglich war.

Nach einer vorteilhaften Ausgestaltung der Erfindung weist das Steuer- und/oder Regelgerät eine programmierbare Speichereinheit auf zum Hinterlegen der Positionswerte der Sensoren. Hierdurch kann für unterschiedliche Fahrzeugtypen ein und dasselbe Fahrzeugumfelderfassungssystem verwendet werden, da die konstruktionsbedingte relative oder absolute Position der Sensoren in dem Steuer- und/oder Regelgerät jeweils programmierbar ist.

Nach einer weiteren vorteilhaften Ausgestaltung der Erfindung weist das Steuer- und/oder Regelgerät eine Verarbeitungseinheit zum Verarbeiten der variierenden Abstände der Sensoren zueinander auf. Diese Verarbeitungseinheit kann insbesondere aus einem Speicher bestehen, in welchem ein Korrekturalgorithmus hinterlegt ist, der die Berechnung eines Korrekturfaktors aus den hinterlegten Positionswerten ermöglicht.

Nach einer weiteren vorteilhaften Ausgestaltung der Erfindung sind die variierenden Abstände der Sensoren in der dem Steuer- und/oder Regelgerät des Fahrzeugsumfelderfassungssystems fest hinterlegt. Bei der Herstellung des Fahrzeugumfelderfassungssystems kann so je nach Fahrzeugtyp eine feste Programmierung des Systems in der Herstellung erfolgen, was besonders kostengünstig ist.

Nach einer weiteren vorteilhaften Ausgestaltung der Erfindung sind die Positionswerte der Sensoren in dem Steuer- und/oder Regelgerät frei programmierbar. Hierdurch ist das System flexibel auch auf nachträglich an dem Fahrzeug angebrachte Bauelemente, wie zum Beispiel Stoßfänger, Halterungen für Ersatzreifen oder Gepäckträger, welche eine andere Positionierung von einem oder mehreren Sensoren erfordern, anpassbar.

Die Aufgabe der Erfindung wird auch durch ein Verfahren zum Betreiben eines Fahrzeugumfelderfassungssystems gemäß den in Anspruch 6 angegebenen Merkmalen gelöst, indem in dem Steuer- und/oder Regelgerät Positionswerte der Sensoren hinterlegt werden, Korrekturwerte für die variierenden Abstände der Sensoren zueinander berechnet werden und die Korrekturwerte beim Auswerten zur Erzeugung eines Warnsignals verwendet werden. Durch einfaches Hinterlegen der Positionswerte ist es mit dem erfindungsgemäßen Verfahren somit möglich, eine asymmetrische oder eine mit unterschiedlichen Abständen der Sensoren versehene Anordnung auf einfache Weise zu berücksichtigen, so dass eine Fehlauswertung bzw. eine Nichterfassung von Objekten sicher vermieden wird. Die Erzeugung des Warnsignals aus den erfassten Werten der Sensoren kann hierbei auf direkte oder indirekte Art erfolgen. Das Berechnen und Verwenden der Korrekturwerte kann durch Implementieren von entsprechenden Algorithmen bzw. Unterprogrammen erfolgen.

Nach einer vorteilhaften Ausgestaltung des erfindungsgemäßen Verfahrens wird das Steuergerät in Abhängigkeit von dem jeweiligen Fahrzeugtyp vorprogrammiert. Dies hat den Vorteil, dass schon beim Hersteller des Systems die typenabhängige Anpassung in der Hinterlegung von unterschiedlichen Positionswerten zwischen den Sensoren einerseits sowie der entsprechenden Module für die Berechnung von Korrekturwerten oder anderweitiger Berücksichtigung der unterschiedlichen Positionen der Sensoren andererseits erfolgen kann. Eine individuelle Anpassung beim Einbau des Systems in den jeweiligen Fahrzeugtyp ist somit nicht erforderlich, was zu einer Reduzierung von Kosten führt.

Nach einer weiteren vorteilhaften Ausgestaltung des erfindungsgemäßen Verfahrens werden die Positionswerte der Sensoren zueinander als relative Werte bezogen auf eine Referenzposition eines Referenzsensors hinterlegt. Hierdurch erfordert das System für jede weitere Position eines Sensors lediglich einen einzigen Wert, so dass die relative Lage des Sensors auf einfache Weise und mit geringem Speicherbedarf hinterlegbar ist.

Die Aufgabe der Erfindung wird auch durch das Steuerund/oder Regelgerät zum Betreiben eines Fahrzeugumfelderfassungssystems mit den Merkmalen gemäß Anspruch 10 gelöst. Dadurch, dass das Steuer- und/oder Regelgerät zum Hinterlegen und Berücksichtigen von variierenden Abständen von einer Reihe von Sensoren zueinander geeignet ist, kann die Positionierung und Verteilung der Sensoren über eine Seite des Fahrzeuges ohne Beschränkung vorgenommen werden. Die Sensoren können asymmetrisch am Fahrzeug-Außenumfang angebracht werden, zum Beispiel bei einer seitlich versetzt vorgesehenen Kennzeichen-Trageinrichtung des Fahrzeuges, oder die Sensoren können auch symmetrisch angeordnet sein, jedoch mit unterschiedlichem Abstand zueinander, zum Beispiel bei einem konstruktiv bedingten Mittenbereich, zum Beispiel einen Kühlergrill oder dergleichen, durch welchen das Anbringen von Sensoren dort nicht möglich ist. Hierdurch können auch konstruktionsbedingt schwierige Fahrzeugtypen mit einem Fahrzeugumfelderfassungssystem ausgestattet werden, ohne dass umfangreiche, individuelle Anpassungen erforderlich sind.

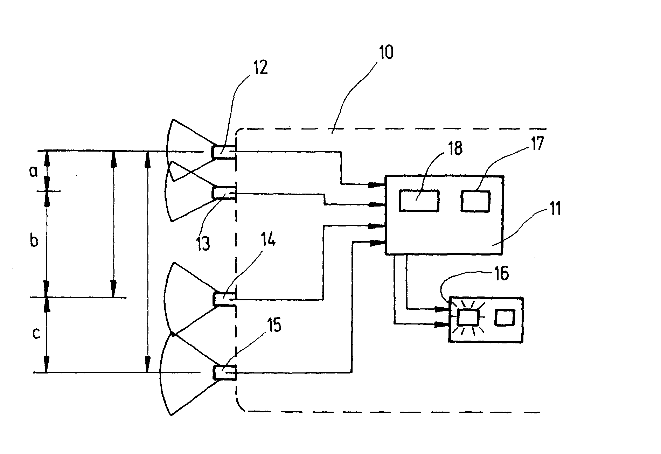

Weitere Vorteile und vorteilhafte Ausgestaltungen der Erfindung sind der nachfolgenden Beschreibung zu entnehmen, in welcher die Erfindung anhand des in der Zeichnung dargestellten Ausführungsbeispiels näher beschrieben und erläutert ist.

In der Figur ist ein Fahrzeug 10 in einer Draufsicht schematisch dargestellt, welches an seinem Frontbereich, das heißt der Fahrzeug-Vorderseite, vier Sensoren 12, 13, 14, 15 aufweist. Die Sensoren weisen jeweils einen Erfassungsbereich auf, der durch Abstrahlkegel zeichnerisch angedeutet ist. Die Sensoren 12, 13, 14, 15 sind in unterschiedlichen Abständen a, b, c jeweils zueinander angeordnet. In dem dargestellten Ausführungsbeispiel ist der Sensor 13 in Richtung zu dem Sensor 12 verschoben positioniert, zum Beispiel um ein Kennzeichen des Fahrzeuges seitlich versetzt an der vorderen Stoßstange anordnen zu können. Hierdurch ergeben sich jeweils unterschiedliche Abstände a, b, c der Sensoren zueinander. Gemäß der Erfindung ist ein Steuergerät 11 des Fahrzeugumfelderfassungssystems vorgesehen, in welchem die Positionswerte der Sensoren 12, 13, 14, 15 zueinander hinterlegt sind. Die Hinterlegung der Positionen bzw. der Abstände der Sensoren 12, 13, 14, 15 in dem Steuerund/oder Regelgerät 11 kann dabei auf relative Weise erfolgen, das heißt durch Referenz auf eine jeweilige Referenzposition eines Referenzsensors, zum Beispiel dem Sensor 12, oder aber auf absolute Angabe der jeweiligen Position. Die durch die Sensoren 12, 13, 14, 15 erfassten Signale werden als Input dem Steuer- und/oder Regelgerät 11 des Fahrzeugumfelderfassungssystems weitergeleitet, in welchem ein Speicher 17 und eine Verarbeitungseinheit 18 neben den für Fahrzeugumfelderfassungssysteme konventionellen Einheiten vorgesehen sind. In dem Speicher 17 sind die entsprechenden Abstandswerte der Sensoren 12, 13, 14, 15 zueinander hinterlegt und werden bei der Auswertung der Signale der Sensoren 12, 13, 14, 15 durch die Verarbeitungseinheit 18 mitberücksichtigt. Dies erfolgt beispielsweise durch Berechnen entsprechender Korrekturwerte bei der Auswertung. Als Output wird von dem Steuer- und/oder Regelgerät 11 ein Signal an einen Signalgeber 16 weitergeleitet, welcher optische und/oder akustische Warnsignale erzeugt, die dem Fahrer des Fahrzeuges einerseits das Vorhandensein und andererseits die relative Nähe zu Objekten im nicht sichtbaren Bereich des Fahrzeuges anzeigen. Der Signalgeber kann einerseits ein diskretes System bzw. ein Anzeigegerät oder ein Lautsprechersystem sein. Andererseits ist denkbar, dass der Output des Steuer- und/oder Regelgeräts in ein Bussystem des Fahrzeuges eingespeist wird und über das Fahrzeuginformationssystem dem Fahrzeuglenker mitgeteilt wird.

Die Erfindung ist selbstverständlich nicht auf das zuvor beschriebene Ausführungsbeispiel beschränkt und umfasst alle Varianten und Realisierungsformen, welche in die Reichweite der nachfolgenden Ansprüche fallen. Insbesondere kann die Anzahl der Sensoren verschieden sein und beispielsweise sechs oder acht Sensoren umfassen. Des Weiteren können die Abstandswerte der Sensoren zueinander sowohl Abstandswerte in einer vertikalen als auch in einer horizontalen Richtung umfassen oder auch eine Kombination aus beidem. Die Programmierung der relativen Positionen der Sensoren kann auf analoge Weise, jedoch ebenso auf digitale Weise, das heißt mit Mikroprozessoren und Speichern, erfolgen.

Sämtliche in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Fahrzeugumfelderfassungssystem zur Überwachung des Nahbereichs eines Fahrzeuges (10) mit den Nahbereich erfassenden Sensoren (12, 13, 14, 15), mit einem Steuer- und/oder Regelgerät (11) zur Auswertung und Weiterleitung von Signalen, welche jeweils von einer Reihe von Sensoren (12, 13, 14, 15) erzeugt werden, wobei mindestens an einer Seite der Peripherie des Fahrzeuges (10) jeweils eine Mehrzahl von Sensoren (12, 13, 14, 15) angeordnet ist, **dadurch gekennzeichnet, dass** die Sensoren (12, 13, 14, 15) mit variierenden Abständen (a, b, c) zueinander angeordnet sind und dass die entsprechenden Positionswerte der Sensoren (12, 13, 14, 15) in dem Steuer- und/oder Regelgerät (11) hinterlegbar sind.

2. Fahrzeugumfelderfassungssystem nach Anspruch 1, **dadurch gekennzeichnet, dass** das Steuer- und/oder Regelgerät (11) eine programmierbare Speichereinheit (17) zum Hinterlegen der Positionswerte der Sensoren (12, 13, 14, 15) aufweist.

3. Fahrzeugumfelderfassungssystem nach Anspruch 1 oder 2, **dadurch gekennzeichnet, dass** das Steuer- und/oder Regelgerät (11) eine Verarbeitungseinheit (18) zum Verarbeiten der variierenden Abstände der Sensoren (12, 13, 14, 15) aufweist.

4. Fahrzeugumfelderfassungssystem nach einem der vorherigen Ansprüche, **dadurch gekennzeichnet, dass** die Positionswerte der Sensoren (12, 13, 14, 15) in dem Steuer- und/oder Regelgerät (11) fest hinterlegt sind.

5. Fahrzeugumfelderfassungssystem nach einem der Ansprüche 1 bis 3, **dadurch gekennzeichnet, dass** die Positionswerte der Sensoren (12, 13, 14, 15) in dem Steuer- und/oder Regelgerät (11) frei programmierbar sind.

6. Verfahren zum Betreiben eines Fahrzeugumfelderfassungssystems eines Fahrzeuges mit einem Steuerund/oder Regelgerät (11), **gekennzeichnet durch** Hinterlegen von Positionswerten der Sensoren (12, 13, 14, 15) in dem Steuer- und/oder Regelgerät (11), Berechnen von Korrekturwerten aus den hinterlegten Abstandswerten und Verwenden der Korrekturwerte beim Auswerten der **durch** die Sensoren (12, 13, 14, 15) erfassten Signale zur Erzeugung eines Warnsignals.

7. Verfahren nach Anspruch 6, **dadurch gekennzeichnet, dass** das Warnsignal in dem Steuer- und/oder Regelgerät (11) direkt oder indirekt erzeugt wird.

8. Verfahren nach Anspruch 6 oder 7, **dadurch gekennzeichnet, dass** das Steuer- und/oder Regelgerät (11) in Abhängigkeit vom Fahrzeugtyp vorprogrammiert wird.

9. Verfahren nach einem der Ansprüche 6 bis 8, **dadurch gekennzeichnet, dass** die Positionswerte der Sensoren (12, 13, 14, 15) zueinander als relative Werte bezogen auf eine Referenzposition eines Referenzsensors hinterlegt werden.

10. Steuer- und/oder Regelgerät zum Betreiben eines Fahrzeugumfelderfassungssystems für ein Fahrzeug (10), **dadurch gekennzeichnet, dass** es zum Hinterlegen und Berücksichtigen von variierenden Abständen (a, b, c) von einer Reihe von Sensoren (12, 13, 14, 15) zueinander geeignet ist.

11. Steuer- und/oder Regelgerät nach Anspruch 10, **dadurch gekennzeichnet, dass** es eine programmierbare Speichereinheit (17) zum Hinterlegen von Positionswerten der Sensoren (12, 13, 14, 15) aufweist.

12. Steuer- und/oder Regelgerät nach Anspruch 10 oder 11, **dadurch gekennzeichnet, dass** es eine Verarbeitungseinheit (18) zum Verarbeiten der variierenden Abstände der Sensoren (12, 13, 14, 15) aufweist.

13. Steuer- und/oder Regelgerät nach einem der Ansprüche 10 bis 12, **dadurch gekennzeichnet, dass** die Positionswerte der Sensoren (12, 13, 14, 15) fest hinterlegt sind.

14. Steuer- und/oder Regelgerät nach einem der Ansprüche 10 bis 12, **dadurch gekennzeichnet, dass** die variierenden Abstände der Sensoren (12, 13, 14, 15) frei programmierbar sind.
